# EUROPEAN PATENT APPLICATION

(11) **EP 4 817 973 A1**
(43) Date of publication of application: **07.10.2026**
(21) Application number: 26169544.9
(22) Date of filing: 31.03.2026
(51) Int. Cl.: B60T 11/10

(54) **HYDRAULIC DISTRIBUTOR WITH COMPENSATOR DEVICE FOR DIRECTIONAL VALVES**

(30) Priority: 31.03.2025 IT 202500006816
(71) Applicant: Walvoil S.p.A., 42124 Reggio Emilia (IT)
(72) Inventor: CERVI, Alessandro, 42124 REGGIO EMILIA (RE) (IT); MESTURINI, Davide, 42124 REGGIO EMILIA (RE) (IT)
(74) Representative: Silva, Valentina

(57) **Abstract**

A valve device (1) for the control of a trailer braking system comprises a converter valve element (110) configured to provide a brake actuation signal to a braking valve element (140) in response to a user-generated braking command. The braking valve element sends the working fluid to a service brake passing through a safety valve element (150). The device further comprises a reducer valve element (120) configured to provide a flow of a working fluid at a reduced pressure. The safety valve element is configured in such a way that when the pressure in a downstream section (52) falls below a predetermined value, said working fluid is allowed to pass to a service brake line and to an auxiliary brake line.

## Description

### FIELD OF APPLICATION

The present invention relates to a hydraulic valve device for controlling a trailer braking system including at least a service brake and a parking and/or automatic brake. In particular, the present invention concerns the management of a safety valve element of the hydraulic braking circuit of a trailer coupled to a towing vehicle.

### TECHNOLOGICAL BACKGROUND

It is well known that in a towing vehicle with a trailer coupled, the hydraulic braking systems must be operatively connected to each other, in particular, when the operator operates the tractor braking control, the braking of the trailer itself is also activated and synchronised.

The braking systems used by manufacturers must meet a number of safety requirements, such as those set out in the EU Delegated Regulation (EU) 2015/68.

According to these standards, two braking lines connected to the trailer are required, which in the event of failure and malfunction of the electrical or hydraulic components also ensure safe braking.

In fact, the trailer has two brakes: a first brake with parking, or automatic, brake functionality, which is normally active if not energised, and a second brake with trailer service brake functionality, which is activated instead if energised. Therefore, within the hydraulic braking circuit, a valve block is required that is capable of synchronising the two braking devices both under normal operating conditions and in emergency situations.

In fact, the activation of the trailer's parking brake must also take place in the event of a break or even a rupture of the pipe in the trailer's braking line: the system must bring itself into a safe condition by instantaneously activating the braking via the parking brake.

Devices for controlling the braking of a trailer of a known type generally comprise a main line and a secondary line connectable to a working fluid source, a working fluid discharge line, a first line connectable to the trailer's braking system (via the aforementioned control line) and a second line connectable to the trailer's automatic and/or parking brake (via the aforementioned supplementary line). Valve means are generally interposed between the main line and the first line and the second line, which can be operated to connect the first line and the second line with the main line or the discharge line. They are controlled by hydraulic and/or electrical signals coming from the vehicle's main control system or generated internally within the block itself.

Examples of devices for controlling the braking of a trailer are described in EP3064408A1, EP3401175A1, EP3401176B1, FR3083763A1 and EP3718840A1.

In addition to the mandatory safety functions, the market increasingly demands a fast dynamic response to controls, where the oil flows to the trailer service brake and the automatic parking brake are managed by a single safety device.

There is therefore a need for improved solutions of the prior art in valve devices for controlling the braking system of a trailer.

### SUMMARY OF THE INVENTION

The technical problem underlying the present invention is to make available a valve device that is structurally and functionally conceived to overcome, at least in part, one or more of the limitations disclosed above with reference to the mentioned prior art.

In the context of this technical problem, an aim of the present invention is to make available to the art a valve device and a hydraulic system comprising the same capable of optimising the dynamic response under the various operating conditions in which the braking system operates.

A further purpose of the invention is to make available a valve device in which the actuation of the operator controls and the hydraulic valve system takes place using two different types of oil, without the risk of the two types of oil mixing, and thus ensuring proper management of the hydraulic system.

It is also an object of the present invention to provide a valve device which, in the event of a break in the connection and/or rupture of the pipe between the control block and the service brake, is capable of bringing itself into a safe condition by reducing the flow rate discharged to the outside so as not to suddenly empty the entire hydraulic tank and cause serious damage to the environment.

A further aim of the invention is to provide a valve device and a hydraulic system which improve the known solutions within the framework of a rational, easy and effective to use and relatively low-cost solution.

This problem and at least one of these aims are at least partially achieved by the invention through a valve device comprising one or more of the features of the invention disclosed in the independent claims, as well as by the invention as defined by one or more of the following aspects.

Based on a first aspect, the invention relates to a valve device for controlling a trailer braking system including at least a service brake and a parking and/or automatic brake.

Preferably the valve device comprises a main pressure line, a service brake line supplying the working fluid to the service brake and an auxiliary brake line to deactivate the parking and/or automatic brake.

The valve device preferably comprises a converter valve element, a braking valve element, a safety valve element, and a reducer valve element.

Preferably, the converter valve element provides a brake actuation signal to the braking valve element in response to a user-generated braking command.

Said braking valve element is preferably connected to the main pressure line and sends said working fluid, at a working pressure, also referred to as first pressure, to the service brake when it receives said brake actuation signal.

Preferably the reducer valve element provides a flow of working fluid at a reduced pressure, i.e. a second pressure lower than the first pressure, to the auxiliary brake line.

On the service brake line, an upstream section of the safety valve element and a downstream section thereof are defined.

Preferably, said safety valve element is configured in such a way that, when the pressure in said downstream section falls below a predetermined value, said working fluid is allowed to pass to the service brake line and to the auxiliary brake line at said first pressure and at said second pressure, respectively.

Preferably, said predetermined pressure value is defined by an equivalent pressure value defined by a spring acting at one end of said proportional slide valve and a braking signal value acting, preferably via the braking signal line, at an opposite end of said proportional slide valve.

Preferably, said proportional slide valve is configured in such a way that, when the sum of the pressure value of the downstream section and said equivalent pressure value defined by said spring is less than the pressure value of the braking signal, the slide of the proportional slide valve is proportionally switched to a condition in which said auxiliary brake line is connected to a discharge line, in such a way as to activate said parking and/or automatic brake.

Advantageously, the safety valve element is further configured in such a way that when the pressure in said downstream section is equal to or lower than said predetermined value, said auxiliary brake line is connected to a discharge line, in such a way as to activate said parking and/or automatic brake.

It should be noted, therefore, that in this way it is possible to operate by keeping the lines dedicated to activating the service brake and the parking and/or automatic brake separate, while guaranteeing safety and optimum system response.

According to a second aspect, the present invention also relates to a valve device including a valve advance element configured to receive a brake pedal pressure signal and to transmit a valve advance signal to said braking valve element.

The valve advance signal is configured to urge, in association with the brake actuation signal, the braking valve element in a condition of passage of the working fluid towards said service brake line upon receipt of said brake pedal pressure signal.

In this second aspect, a subsystem within the circuit, known as "advance" in the jargon, is then used to pre-pressurise the service brake line as soon as the command is activated, so as to promote an effective dynamic response.

Further preferred aspects are also defined in the appended claims as well as in the following description.

Other features and advantages of the present invention will become more apparent from the description of a preferred, but not exclusive, embodiment of a hydraulic valve device for controlling the braking of a trailer, illustrated by way of non-limiting illustration in the accompanying drawings.

### BRIEF DESCRIPTION OF THE DRAWINGS

This and other features will be more apparent from the following description of some embodiments illustrated purely by way of non-limiting example in the accompanying drawings, in which:
Figure 1 is a schematic illustration of a valve device and the related hydraulic system made in accordance with a first embodiment of the present invention; and
Figure 2 is a schematic illustration of a valve device and the related hydraulic system made in accordance with a second embodiment of the present invention and including the advance device.

### DETAILED DESCRIPTION OF THE INVENTION

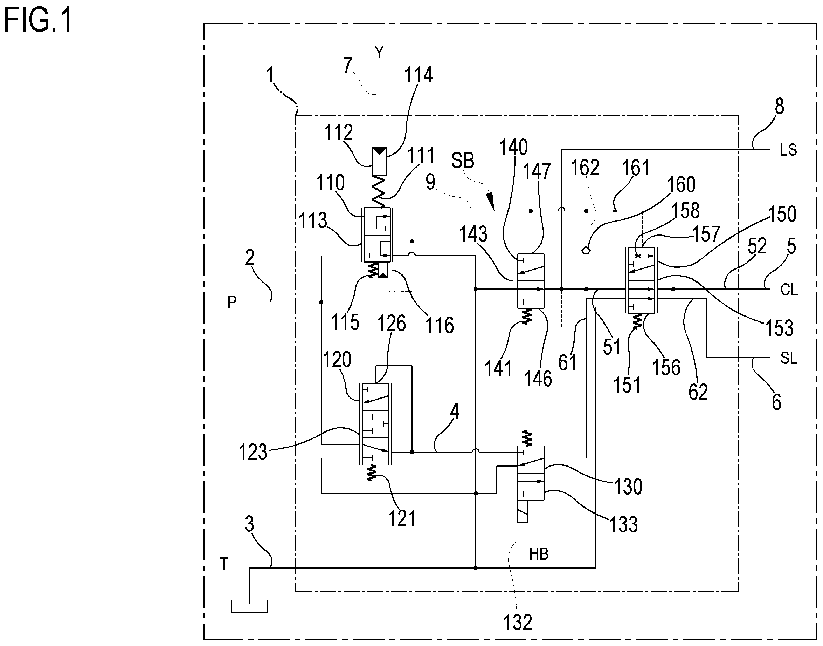

With reference initially to Figure 1, an valve device in accordance with the invention is illustrated overall with reference number 1.

As shown in Figure 1, the valve device 1 comprises at least one main pressure line 2, also referred to as main line, which can be connected to a source P of a working fluid at a first pressure P1.

The source P may for example be of the type of a positive displacement pump, or another type of pump suitable for operating the braking system.

In addition to the main pressure line 2, the valve device 1 further includes at least one reduced pressure line 4, also referred to as a secondary line, which is intended for a flow of working fluid at a second pressure P2, of reduced value with respect to the pressure P1.

As will be seen in more detail below, the reduced pressure line 4 is advantageously distinct from the main pressure line P.

There is also at least one discharge line 3 configured for discharging a working fluid and connectable to a discharge tank T.

The connection to the trailer's braking system is via a service brake line 5 configured to be connected to the trailer's braking system to actuate the service brake, and an auxiliary brake line 6, configured instead to be connected to the trailer's automatic and/or parking brake.

Advantageously, the service brake line 5 and the auxiliary brake line 6 are connected by means of appropriate connections to the towing vehicle, in particular, the service brake line 5 is made in such a way as to send working fluid to the trailer service brake CL, while the secondary activation line 6 is made in such a way as to send working fluid to the automatic parking brake SL. This parking brake SL can be controlled either automatically or by user activation as a handbrake. It will be understood, however, that the principles of the present invention are also applicable to different situations and, therefore, a general reference may be made to a parking and/or automatic brake.

Again with reference to Figure 1, it should be noted that when the brake SL is connected to discharge T via the line 3 through the auxiliary brake line 6, the brake is active. If, however, the brake SL is connected at the reduced pressure P2 via the line 4, the brake SL is deactivated.

Conversely, when the brake CL is connected to discharge T via the service brake line 5, the brake is deactivated, but is active when connected at a control pressure, represented in this example by the first pressure P1.

Preferably, the valve device 1 also comprises a line 7 which receives a vehicle braking control signal Y and a line 8 connected to the load sensing line LS of the vehicle's main hydraulic system to transmit the hydraulic load value information of the braking system to the system.

Within the valve device 1, there are a plurality of valve elements and, in particular, in some embodiments, such as the one depicted in Figure 1, the valve device 1 comprises six valves, which enable the management of the previously mentioned functions.

The first valve element 110, referred to below as the converter valve element, is connected with the main pressure line 2, the discharge line 3 and a braking signal line 9. Preferably, this valve element is a three-way proportional slide valve 113, controlled at the end by a spring 111 preloaded via a piston 112.

The movement of the piston 112 is controlled via the braking control signal Y from the line 7.

For this purpose, the piston 112 is configured in such a way as to be urged by the braking circuit oil via the line 7, causing movement of the piston 112 when an action is made on the brake pedal or, more generally, when a braking command is given by the driver.

In some embodiments, the piston 112 incorporates a hydraulic seal 114 for the purpose of not mixing the braking oil present along said braking line 7 with the hydraulic oil of the hydraulic control system present throughout the remaining part of the valve device 1. More generally, a seal 114 is therefore present in some embodiments to isolate the braking line 7 from the other lines in the valve device 1.

Advantageously, a positioning spring 115 defining the normal opening position and an active area 116 connected to the braking signal line 9 exiting said converter valve element 110 act at the opposite end to the spring 111 of the proportional slide 113.

In its normal operating position, the line 9 is connected to the discharge line 3; when the force imparted by the spring 111, generated by the pressure of the line 7 acting on the piston 112, is greater than the force generated by the spring 115 together with the equivalent force of the pressure of the braking signal line 9 on the active area 116, the valve slide moves proportionally by opening the connection between the main pressure line 2 and the braking signal line 9 and closing the connection to the discharge line 3.

The valve element 110 is configured in such a way that a brake actuation signal is generated at this position on the braking signal line 9, which is used to actuate the service brake CL in the manner described in more detail below.

Connected to the main pressure line 2 is a second valve element 120, also referred to below as a reducer valve element, which converts the first pressure P1 supplied by the source P into a reduced pressure P2 present on line 4. This reduced pressure, hereafter also referred to as second pressure P2, is advantageously suitable for releasing the parking brake, as described above.

In some embodiments, the reducer valve element 120 is a three-way proportional slide valve 123.

More generally, the reducer valve element 120 is connected not only to the main pressure line 2 and the reduced pressure line 4, but also to the discharge line 3.

Preferably, the proportional slide is controlled at one end by a spring 121 and at the opposite end by an active area 126 connected to the reduced pressure line 4. The spring 121 defines the normal operating position of the slide, i.e. the connection between the main pressure line 2 and line 4. When the equivalent force of the pressure 4 on the active area 126 is greater than the equivalent force of the spring 121, the slide valve 123 moves proportionally by first closing all connections and then opening the connection between the reduced pressure line 4 and the discharge line 3 and closing the connection to the main pressure line 2.

In preferred embodiments, connected to the reduced pressure line 4 is a hand brake valve element 130, which acts on the reduced pressure line 4, the discharge line 3 and a first section 61 of the auxiliary brake line 6, upstream thereof.

Preferably, the valve element 130 is a three-way, two-position proportional slide valve 133, controlled at one end by a spring 131 and at the opposite end by a solenoid 132 which receives the handbrake control signal HB, generated by a user in the cabin at the moment the handbrake is activated.

The spring 131 defines the normal operating position of the valve 133, i.e. the connection between the discharge line 3 and said first section 61 of the auxiliary brake line 6. When the solenoid 132 is energised, the slide moves to the second operating position, opening the connection between the reduced pressure line 4 and the section 61, and closing the connection to the discharge line 3.

In some embodiments, which are not illustrated, the parking brake valve element can be driven at one end by an external hydraulic signal opposing a spring positioned at the opposite end.

In addition to the previously mentioned valve elements 110 and 120, the main pressure line 2 is connected with a further valve element 140, referred to below as the braking valve element 140.

This valve element 140 acts on the high-pressure line 2, the discharge line 3 and the main brake activation line 5, at a first section 51 thereof.

Preferably, the valve element 140 comprises a three-way proportional slide valve, controlled at one end by a spring 141 and an active area 146 connected to the first section 51 of the service brake line 5.

At the opposite end is a second active area 147 connected to the braking signal line 9 generated by the conversion valve element 110, as illustrated above. Under normal operating conditions, the line 51 is connected to the discharge line 3 while the connection to the main pressure line 2 is closed. When the equivalent force determined by the braking signal pressure 9 on the active area 147 is greater than the force generated by the spring 141 together with the equivalent force of the pressure of the section 51 on the active area 146, the slide moves proportionally by opening the connection between the main pressure line 2 and the section 51 of the service brake line 5, so as to close the connection to the discharge line 3.

In general, the braking valve element 140 is configured to send the working fluid at pressure P1 to the service brake CL via section 51 upon receipt of the brake actuation signal SB.

The first section 51 of the service brake line 5 within the valve device 1 is also intercepted by the load sensing line 8 of the vehicle's main hydraulic system to transmit the information of the instantaneous braking load value into the vehicle's hydraulic system.

The valve device 1 further comprises a fifth valve element 150, referred to below as the safety valve element.

In some embodiments, the valve element 150 intercepts both the service brake line 5 and the auxiliary brake line 6, defining respective upstream sections 51, 61 and downstream sections 52, 62. Advantageously, the first section corresponds with the downstream section defined herein and the downstream sections will also be referred to below as second sections.

Preferably, the valve element 150 comprises a 5-way proportional slide 153 controlled at a first end by a spring 151 and an active area 156 connected to the second section 52 of the service brake line.

Preferably, at the second end there is a second active area 157 connected to the line 9 of the braking signal SB. Under normal operating conditions, section 51 is connected to section 52 and section 61 to section 62, while the connection to the discharge line 3 is plugged. When the equivalent force given by the pressure of the brake signal SB on the active area 157 is greater than the force generated by the spring 151 together with the equivalent force of the pressure present on the section 52 on the active area 156, the slide moves proportionally by opening the connection between the second section 62 of the auxiliary brake line 6 and the discharge line 3 and closing the connection with the first section 61. In other words, this switching of the slide takes place when the pressure present in section 52 falls below a predetermined value, a value which will therefore preferably be defined by the value of the spring 151 and the configuration of the braking signal line 9, which determines the value of the signal SB present on the opposite end to that on which the spring 151 acts and the pressure present in section 52.

In some embodiments, simultaneously with the opening of the connection between the second section 62 and the discharge line 3, the connection between the first section 51 of the service brake line 5 and the second portion 52 is proportionally reduced, preferably by means of a throttled passage 158 which at the end-stop can reach a zero cross-sectional area, effectively closing the connection between the upstream sections 51 and downstream sections 52 of said safety valve element 150.

In some embodiments, there are two further elements along the braking signal line 9. Preferably, there is a throttled passage 161 located upstream of the active area 157 on which the braking signal SB acts, which has the function of damping the pressure fluctuations present at the second end of the valve 153 slide.

In some embodiments, on line 9 there is a non-return valve 160 arranged in a branch of line 9, preferably upstream of the throttled passage 161. The function of the non-return valve 160 is to allow unidirectional connection between line 9 and section 51 so that line 9 can be emptied in the event of excessive pressurisation.

This makes it possible in particular to improve the opening and closing dynamics of the valve elements 140 and 150.

Under normal operating conditions, i.e. with all the valves de-energised and the source P of the main pressure line 2 inactive, the automatic brake SL is connected to discharge T via the valve element 150. Thus, the automatic brake SL is active and the service brake CL is connected to discharge via the valve elements 140 and 150, being consequently deactivated. Even when controlling the valve element 110 via an external signal along the line 7, it is not possible to switch the valve element 140, which therefore remains normally closed.

Once the vehicle is activated, the source P of pressure supply P1 is activated and the valve element 120 moves to its working position, recreating on line 4 the reduced pressure P2 required to release the automatic brake SL. Preferably, the brake is only released when the user releases the handbrake HB in the control cabin. This condition causes energisation of the solenoid 132 of the valve 130 in such a way that the reduced pressure line 4 communicates with the automatic brake SL itself via the line 6 along the lines 61 and 62, which are connected to each other via the valve element 150.

When the user activates the brake command, a braking command signal Y is sent via line 7. The piston 112 activates the valve element 110 and on line 9 the brake actuation signal SB is produced with the working fluid present within the hydraulic valve circuit from the main line 2 and not the braking oil present along line 7. The brake actuation signal SB from line 9 activates the brake valve 140, recreating a control pressure along section 51, which via the connection to line 52 activates the service brake CL.

As mentioned earlier along lines 5 and 6 is the safety valve element 150.

Under normal operating conditions, the safety valve element 150 is maintained in the normally open condition and the connections between sections 51 and 52 and sections 61 and 62 are maintained through the action of the spring 151. Even when the user activates the brake and pressurises line 9, if the pipe of line CL is correctly connected, section 52 is pressurised and does not allow the switching of the valve slide 153 by the action of the pressure in section 52 on the active area 156.

If, as a result of a rupture in the pipe carrying the working fluid to the service brake CL, or due to another malfunction, section 52 becomes depressurised and the user activates the brake, the valve slide 153 switches to the safety position and progressively closes the passage between section 51 and section 52.

The dispersion of the working fluid of the hydraulic system through the throttled passage 158 is also reduced.

Simultaneously with the gradual closure of the passage between section 51 and section 52, section 62 is connected to discharge. This means that the braking of the trailer is no longer carried out with the service brake CL, but with the automatic brake SL, while still guaranteeing the safety requirements set by legislation. In order to speed up the dynamic response of the system, the non-return valve 160 is fitted, which allows a flow, via the connecting section 162, between line 9 and section 51, if the pressure in line 9 is higher, in order to achieve a more effective dynamic response.

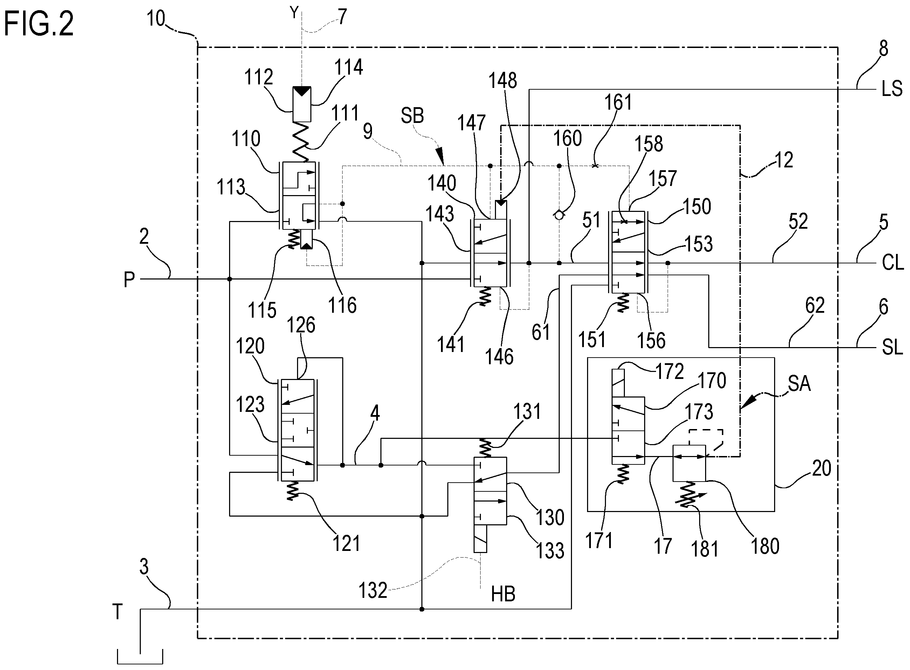

Figure 2 shows a second embodiment of the invention in which a secondary valve device 20 is present within the valve device **1,** which may or may not be integrated in the same block containing the previously mentioned valve elements 110, 120, 130, 140, 150 and 160. This secondary valve device 20 is connected to the reduced pressure line 4, the discharge line 3 and a third line 12, referred to as the advance signal line. This signal is indicated in the figure by the reference SA. Inside the secondary valve device 20 there are two valve elements: a valve advance element 170 and a pressure reducer 180.

Connected to the first valve advance element 170 are the reduced pressure line 4, the discharge line 3 and a first portion 17 of the advance signal line 12.

In preferred embodiments, this device is a three-way, two-position slide 173 controlled at one end by a spring 171 and at the opposite end by a solenoid 172 which receives the electrical actuation signal from the brake pedal BP as soon as the user starts to move the pedal, even before the braking command signal Y on line 7 has been generated. The spring 171 defines the normal operating position of the valve element 170, i.e. the connection between the discharge line 3 and said first portion 17 of the advance signal line 12. When the solenoid 172 is energised the valve slide 173 moves to the second operating position opening the connection between the reduced pressure line 4 and the first portion 17 of the advance signal line closing the connection to the discharge line 3.

The first portion 17 of the advance signal line 12 can be connected with the pressure reducer 180, which has the purpose of further lowering the reduced pressure value P2 of the line 4. The resulting pressure value can be selected by varying the preload of a calibration spring 181 of the pressure reducer 180 itself.

Note that there may also be embodiments of the present invention in which the pressure reducer 180 is not present within the secondary valve device 20, in which case line 12 and line 17 may coincide.

As can be seen from Figure 2, the advance signal line 12 is connected with the valve 140 at a third active area 148. Advantageously, the third active area 148 is present on the same end of the valve slide 143 as the active area 147 on which the pressure signal SB of the braking command line 9 acts.

The ratio between the active areas 148 and 147 and the reduced pressure value present on the advance signal line 12 is dimensioned in such a way that the pressure of the line 12 acting on the active area 148 can begin to switch the slide 143 of the braking valve 140 but only partially. Instead, full switching takes place when the braking command signal SB arrives at the active area 147 after the valve 110 has converted the braking signal from line 7.

When the user starts to activate the brake command, a sensor on the pedal activates the valve element 170, which, with or without the reducer 180, pressurises line 12 and performs pre-switching of the braking valve element 140.

This pre-switching results in an initial reduced pressure on section 51 and consequently pre-activates the service brake CL. In the meantime, the brake pedal begins to generate a hydraulic pressure signal Y via line 7 which, as mentioned above, activates the valve element 110, generating the brake command signal SB which, via line 9, completes the activation of the valve element 140.

In this way, the activation pressure required to activate the service brake CL and to complete the braking of the trailer itself is generated on section 51.

The invention thus solves the proposed problem while achieving a plurality of advantages. In particular, the provision of a single valve element that intercepts the two pressure lines operating on the two braking systems in the trailer, i.e. the service brake line and the auxiliary brake line, makes it possible to implement the functions required for the correct operation of the braking system with an efficient and rationalised solution, in full compliance with the safety conditions required by legislation in force.

In addition, the brake actuation is performed via a distinct line from the user-operated brake command via pedal pressure. This also contributes to the efficiency and reliability of the system.

## Claims

1. Valve device (1) for the control of a trailer braking system comprising at least a service brake (CL) and a parking and/or automatic brake (SL), said valve device (1) comprising:
- A main pressure line (2) configured to be connected to a source (P) of a working fluid at a first pressure (P1) suitable for actuating the service brake (CL);
- A service brake line (5) configured to supply said working fluid to the service brake (CL) for actuation thereof;
- An auxiliary brake line (6) configured to deactivate the parking and/or automatic brake (SL);
- A converter valve element (110) configured to provide a brake actuation signal (SB) to a braking valve element (140) in response to a user-generated braking command (Y);
- Said braking valve element (140) being connected to said main pressure line (2) and being configured to send said working fluid at said first pressure (P1) to said service brake (CL), passing through a safety valve element (150), upon receipt of said brake actuation signal (SB);
Said valve device further comprising:
- A reducer valve element (120) configured to provide a flow of a working fluid at a second pressure (P2) lower than said first pressure (P1) to said auxiliary brake line (6), passing through said safety valve element (150);
Wherein an upstream section (51) of said safety valve element (150), connected to said braking valve element (140), and a downstream section (52) of said safety valve element (150), configured to be connected to said service brake (CL), are defined on said service brake line (5), said safety valve element (150) being configured so that, when the pressure in said downstream section (52) falls below a predetermined value, said working fluid is allowed to pass to said service brake line (5) at said first pressure (P1) and to said auxiliary brake line (6) at said second pressure (P2), respectively, and said safety valve element (150) is further configured so that when the pressure in said downstream section (52) is equal to or lower than said predetermined value said auxiliary brake line (6) is connected to a discharge line (3) configured to be connected to a discharge tank (T), so as to activate said parking and/or automatic brake (SL).

2. Valve device (1) according to claim 1, wherein said main pressure line (2) separates into two distinct sections, respectively connected to said converter valve element (110) and to said braking valve element (140), said converter valve element (110) being configured so as to send said working fluid to a braking signal line (9) to generate said braking signal (SB).

3. Valve device (1) according to claim 1 or 2, wherein said converter valve element (110) is a three-way proportional slide valve (113), controlled by a spring (111) preloaded through a piston (112) configured so as to be urged, via a respective braking line (7), by means of oil present in a braking circuit of the trailer and so as to result in a consequent movement of the piston (112) when a braking command is given, said piston (112) comprising a hydraulic seal (114) configured to isolate said respective braking line (7) from said main braking line (2), service brake line (5) and auxiliary brake line (6) of said valve device (1).

4. Valve device (1) according to any one of the preceding claims, wherein said safety valve element (150) comprises a proportional slide valve (153).

5. Valve device (1) according to the preceding claim, wherein said proportional slide valve (153) is of the five-way, two-position type.

6. Valve device (1) according to claim 4 or 5, wherein said predetermined pressure value is defined by an equivalent pressure value defined by a spring (151) acting at one end of the distributor of said proportional slide valve (153) and by a braking signal value (SB) acting, via the braking signal line (9), at an opposite end of the distributor of said proportional slide valve (153), said proportional slide valve (153) being configured such that, when the sum of the pressure value of the downstream section (52) and said equivalent pressure value defined by said spring (151) is lower than the braking signal (SB) pressure value, the distributor of the proportional slide valve (153) is proportionally switched to a condition in which said auxiliary brake line (6) is connected to said discharge line (3), so as to activate said parking and/or automatic brake (SL).

7. Valve device (1) according to any one of the preceding claims, wherein a respective upstream section (61) of said safety valve element (150), connected to said reducer valve element (120), and a downstream section (62) of said safety valve element (150), configured so as to be connected to said parking and/or automatic brake (SL), are defined on said auxiliary brake line (6), said safety valve element (150) being configured such that, when the pressure in said upstream section (51) is substantially equal to the pressure in said downstream section (52), said upstream section (51) is in communication with said downstream section (52) and said respective downstream section (62) is in communication with said respective upstream section (61).

8. Valve device (1) according to any one of the preceding claims, when dependent on claim 4, wherein said proportional slide valve (153) includes a throttled passage (158) configured so as to close proportionally when the pressure in said downstream section (52) is lower than in said upstream section (51).

9. Valve device (1) according to claim 8, wherein said throttled passage (158) is configured to close in an end-stop position of said proportional slide valve (153).

10. Valve device (1) according to any one of the preceding claims, when dependent on claim 2, wherein said braking signal line (9) is configured to provide said braking signal (SB) to said safety valve element (150), a non-return valve (160) being provided at a connecting section (162) between said braking signal line (9) and said upstream section (51).

11. Valve device (1) according to any one of the preceding claims, further comprising a handbrake valve element (130), interposed between said reducer valve element (120) and said safety valve element (150), and configured so as to selectively allow and prevent a passage of said working fluid at said second pressure (P2) towards said safety valve element (150) depending on a handbrake command signal (HB).

12. Valve device (1) according to any one of the preceding claims, further comprising a valve advance element (170) configured to receive a brake pedal (BP) pressure signal and to transmit a valve advance signal (SA) to said configured to urge, in association with said brake actuating signal (SB), said braking valve element (140) in a condition of passage of the working fluid towards said service brake line (5) upon receipt of said brake pedal (BP) pressure signal.

13. Valve device (1) according to the preceding claim, wherein said valve advance element (170) comprises a three-way two-position proportional slide valve (173) configured to receive said working fluid at said second pressure (P2) and send it, upon switching of said proportional slide valve (173) generated by the receipt of said brake pedal (BP) pressure signal, to a pressure reducer (180) by means of which said working fluid is supplied, at a further reduced pressure, to said braking valve element (140).
